# EUROPEAN PATENT SPECIFICATION

(11) **EP 3 034 431 B1**
(45) Date of publication and mention of the grant of the patent: **19.04.2017**
(21) Application number: 14198303.1
(22) Date of filing: 16.12.2014
(51) Int. Cl.: B65D 75/58, B60C 19/00

(54) **Container for tire balancing material**
Behälter für Reifenauswuchtmaterial
Récipient pour matériau d'équilibrage de pneu

(43) Date of publication of application: 22.06.2016
(73) Proprietor: WEGMANN automotive GmbH & Co. KG, 97209 Veitshöchheim (DE)
(72) Inventor: Lutz, Michael, 97209 Veitshöchheim (DE); Bauer, Christian, 97209 Veitshöchheim (DE); Schmitt, Diana, 97209 Veitshöchheim (DE)
(74) Representative: Lohr, Georg

(56) References cited:
- LU-A- 35 421
- US-A- 2 333 587
- US-A- 2 962 192
- US-A1- 2008 000 786
- US-B1- 6 249 971
- US-B2- 7 360 846

## Description

### Field of the invention

The invention relates to balancing of tires of vehicles, specifically to a container or a bag for containing and applying a balancing material into the interior of tires. Such a balancing material may comprise small particles, like small beads, which may be of a ceramic material or silicate.

### Description of the related art

For balancing of vehicle wheels, normally balancing weights are attached to the rim of a wheel. As an alternative for dynamically balancing of tires of vehicles, it is known to insert a certain amount of small particles of a balancing or compensation material into the tire. The material is not fixed to the rim, like discrete balancing weights. Instead, it is freely flowing in the interior of the tire. The material is mainly accumulated at areas of the inner surface of the tire, where the tire mass is lower due to manufacturing tolerances or due to wear. By the additional mass of the compensating material, the mass distribution over the outer surface of the tire is equalized, leading to an even mass distribution and to a balanced wheel.

US 6,249,971 B1 discloses a compensating material composition of inorganic material and organic material. The compensating material is formed to pellets or a briquette, which can easily be inserted into the tire and which break apart in a tire upon rotation of the tire, releasing individual particles. The disadvantage is a complex processing of the compensating material. Furthermore, auxiliary materials have to be added to the compensating material to maintain the shape of the pellets or briquettes. These materials may have unwanted effects in the tire. They may lead to earlier aging of the rubber material, and therefore may affect safety and reliability. Additional packaging is required to prevent disintegration of the material during shipment.

US 7,360,846 B2 discloses a method for treating a tire to balance a wheel by using a container having a removable resilient clip and an adhesive to keep the container temporarily closed. After inserting the container into the tire, the tire has to be impacted to open the container. Impacting the tire may be critical as the impact may either not be strong enough, or at the correct position to force the container to open. If the impact is too hard, it may lead to a damage of the tire.

### Summary of the invention

The problem to be solved by the invention is to provide a method and a device for applying balancing material into a tire which is easy to use, prevents loss of the material during handling, and does not require additional packaging for shipment.

Solutions of the problem are described in the independent claims. The dependent claims relate to further improvements of the invention.

In a first embodiment which is not part of the present invention, a first container for tire balancing material comprising particles defines an inner space for holding the weight balancing material. The inner space has an opening duct which is sealed to enclose the balancing material within the first container during shipment and before application to the tire. The first container has a perforation for breaking off the seal, allowing the balancing material to flow out through the opening duct. This allows to use a robust container which easily can withstand shipment without losing balancing material. Before use, the seal is broken off or separated from the first container to open the opening duct and allows the balancing material to flow out of the first container.

In a preferred embodiment, at least a second container is attached to or combined with the first container for containing the balancing material. The second container preferably comprises at least one accessory which may be required for completing the wheel assembly and/or for using the balancing material. Such an accessory may be a tire valve core and/or a tire valve and/or a valve cap. Preferably, the valve core is a special embodiment having at least one means to prevent intrusion of the balancing material. Normal valve cores may be blocked, when balancing material is intruding to the valves. Therefore, it may be desirable to use special valve cores having either small openings or ducts which allow only the flow of air, but retain the balancing material. There may also be some kind of filter or sieve at the valve core. If the accessory includes a valve, it also includes a valve core which is required for functioning. It is preferred, if the valve cap has a special marking to identify a tire containing tire balancing material.

To obtain access to the content of the second container, it preferably must be removed or torn off from the container system. It is preferred, if this step removes or opens the seal, and therefore opens the opening of the first container.

In another simplified embodiment which is not part of the invention, there is only a first container having a duct which is closed by a tab or sealing strip which can be removed by a perforation.

The embodiments disclosed herein offer a simple to use container system for balancing material. The container may be of comparatively rigid and/or solid material which holds and protects the balancing material within the container during shipment. Before applying the balancing material to a wheel, the person who is applying the balancing material is motivated or urged to open the duct of the first container by removing or tearing off the second container which contains an accessory which is further required to assemble the wheel. Therefore, it is nearly impossible that the person applying the balancing material forgets to open the duct, which would prevent the balancing material of flowing into the tire. Therefore, the addition of the accessory in a second container makes the container system fail-save in use. By applying other necessary accessory within the same container system, it can also be prevented that an incorrect accessory like a wrong valve core and/or valve cap is used in a tire with balancing material applied.

The duct at the first container prevents balancing material coming out of the first container at the moment when the second container is torn off and when placing the first container within the tire. As long as the first container is held upright with the duct to the top, all balancing material will remain in the first container. When the first container is placed in the tire, which is usually done in a horizontal position, the balancing material starts flowing out of the first container and is smoothly distributing within the tire. When the complete wheel with a tire and a rim together with a valve core and/or valve cap has been assembled and mounted to a car, more and more of the balancing material is released through the duct during rotation of the wheel. This gradual release of the balancing material into the tire ensures an even distribution of the balancing material.

In accordance with the present invention, the container system is made of plastics and/or paper, and/or a plastics paper composite material. It is preferred to use the plastics as the inner side to prevent the particles of the balancing material and/or dust thereof to penetrate through the surface. Preferably, paper is at the outside, which may have printed type information and/or using instructions. Most preferably, the first and second containers are bags.

A further aspect relates to a method of applying balancing material to a wheel. The method comprises the steps of opening a first container of a container system by removing or tearing off a second container from a first container along a perforation, placing the first container within a tire, releasing of balancing material from the first container through a duct into the tire. There may be an additional step of selecting an appropriate size of balancing material from a selection of different sizes of balancing material.

### Description of Drawings

In the following the invention will be described by way of example, without limitation of the general inventive concept, on examples of embodiment with reference to the drawings.
Figure 1 shows a preferred embodiment.
Figure 2 shows an open first container.
Figure 3 shows a slightly modified embodiment of a container system.
Figure 4 shows an embodiment with one container (not part of the invention).
Figure 5 shows an embodiment with two connected containers.
Figure 6 shows an embodiment with an additional seal.
Figure 7 shows a sectional view through the first container.
Figure 8 shows a sectional view through the duct.
Figure 9 shows a sectional view through the second container.

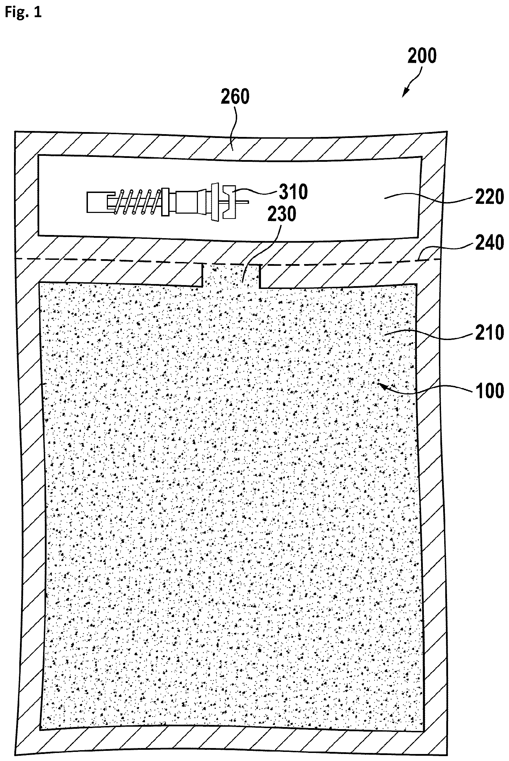

In Figure 1, a first example is shown. A container system 200 comprises a first container 210 and a second container 220. The first container 210 has a duct 230 oriented towards the second container 220. Preferably, the second container 220 contains at least one accessory 310 which comprises a tire valve core and/or a tire valve and/or a valve cap. Furthermore, there is a perforation 240 between the first container 210 and the second container 220 such that when the second container is separated from the first container by the perforation, the duct 230 is opened. As long as the first container is held upright with the duct 230 to the top, the balancing material remains in the first container. The first container is then placed in a tire, whereby the balancing material slowly flows out of the first container 210 through the duct 230. It is preferred, if the container system is made of plastics and/or paper, and/or a combination thereof. Most preferably, it is a paper plastics composite bag. It is preferred, if it has a sealing 260 which is used for sealing a first and a second sheet of material generating an enclosure forming a first container and a second container. The sealing may be glued, stemmed, welded, or made by another technology to seal the container system.

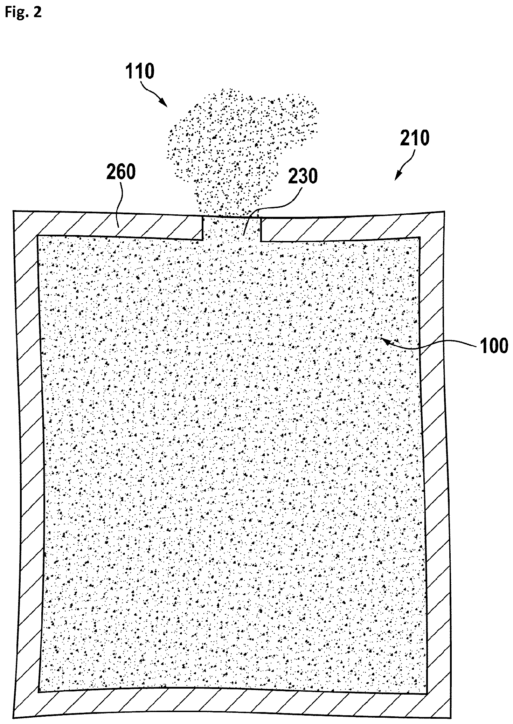

In Figure 2, a first container with an open duct 230 is shown. The balancing material 100 is flowing out 110 of the container into the tire.

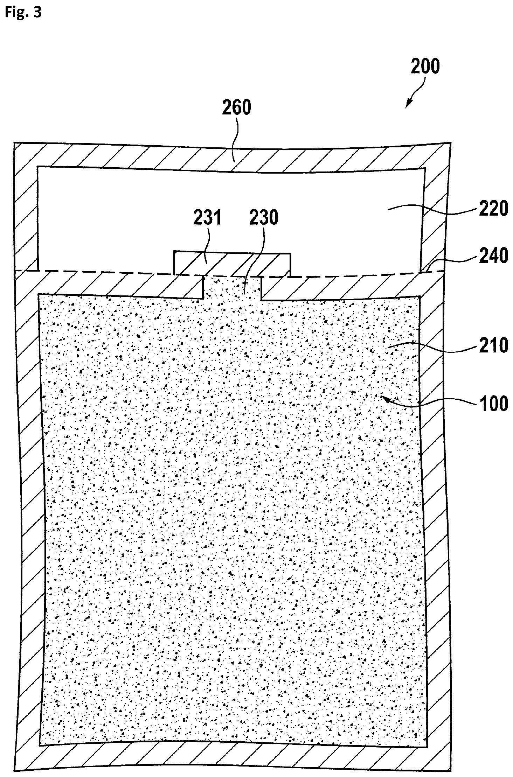

In Figure 3, an embodiment of a container system in accordance with the present invention is shown.

Here, the duct 230 is covered by a cover 231 which may also be part of the container system. The duct seal 231 is separated by the perforation 240 from the duct and therefore can be torn off when removing the second container 220 of the system.

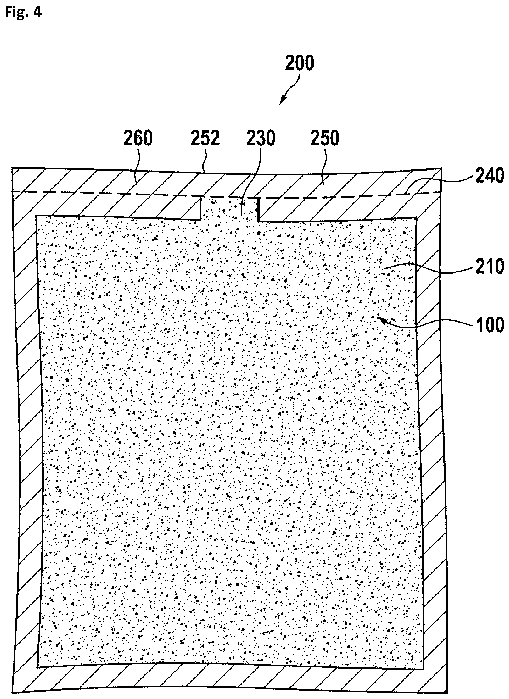

In Figure 4, an embodiment with only one container is shown but which is not part of the invention. Here, a sealing strip 232 is provided which can be removed from the container system by removing or tearing it off at the perforation 240.

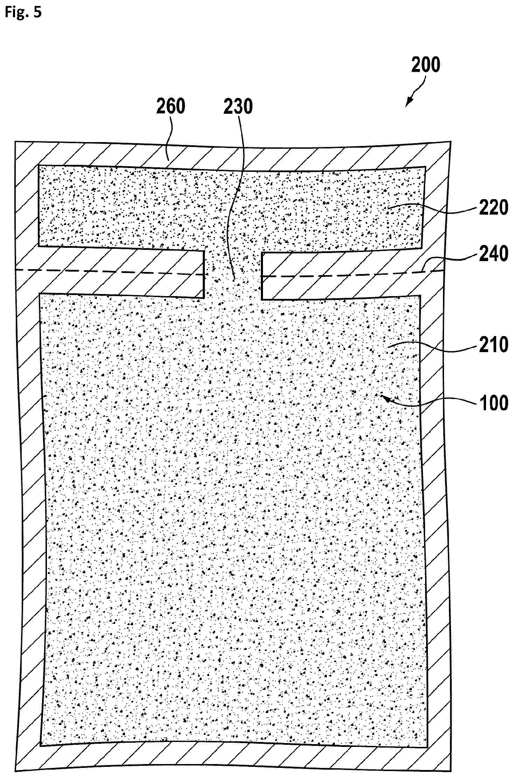

In Figure 5, an embodiment with a first container 210 connected to a second container 220 is shown. Here, the duct 230 is not closed. Instead, the second container 220 serves as a cover for the duct. Therefore, balancing material may flow into the second container 220, but it may not flow outside of the container system. By tearing off the second container 220 from the first container 210, the duct 230 is again opened and balancing material may flow to the outside.

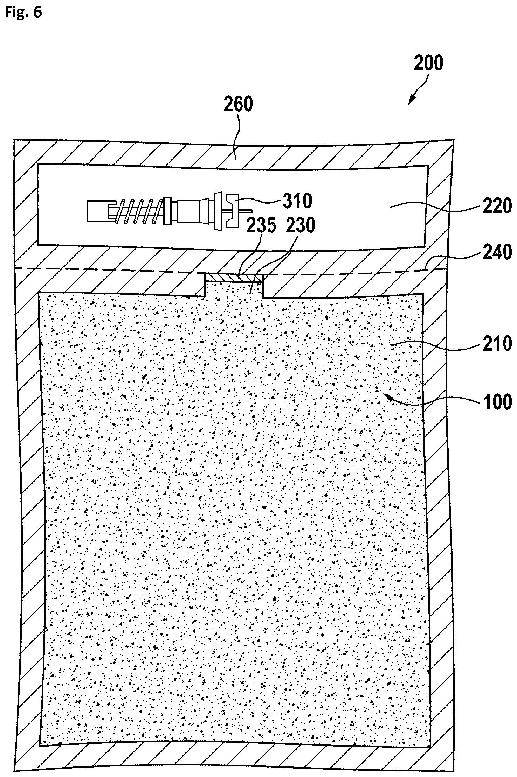

In Figure 6, an embodiment with an additional seal 235 at the duct is shown. This seal may be a small piece of adhesive tape, or it may be of the same material as the container system is. This seal may open, when the container is placed in a tire.

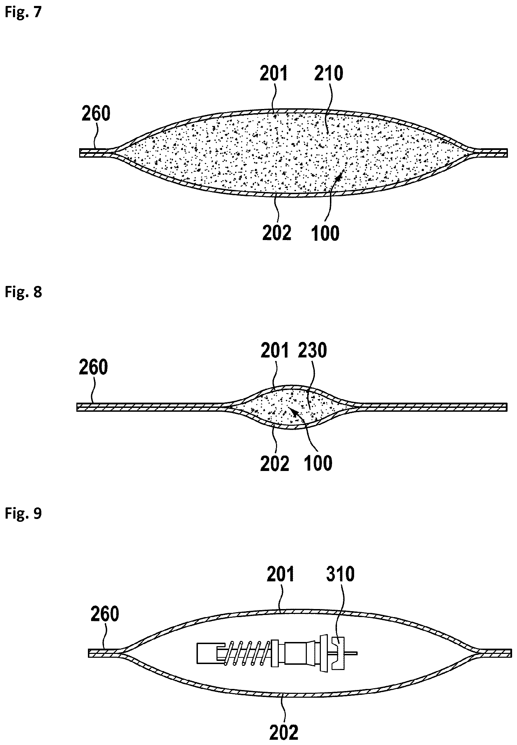

In Figure 7, a sectional view through the first 210 container is shown. Here, the container system as well as the first container 210 comprises or is formed of a first layer 201 and a second layer 202, which are connected together at the rim 260. The layers preferably are made of paper and/or plastics, and/or a combination thereof. The first container is enclosing balancing material 100.

In Figure 8, a sectional view through the duct 230 is shown. Here also, the first layer 201 and the second layer 202 can be seen.

In Figure 9, a sectional view through the second container is shown. Here, between the first layer 201 and the second layer 202, an accessory 210 like a valve may be enclosed.

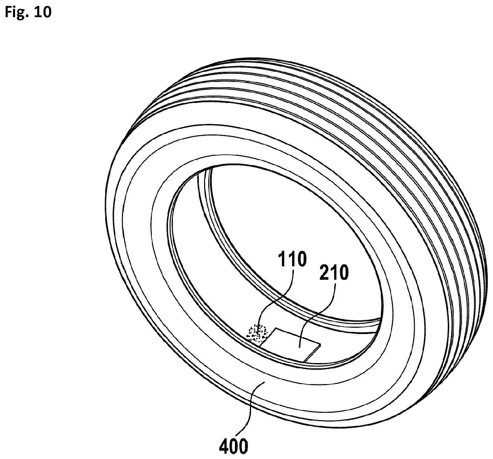

Figure 10 shows a tire 400 with a first container 210 and particles of balancing material flowing out of the first container.

### List of reference numerals

- 100: balancing material
- 110: balancing material outside of container
- 200: container system
- 201: first layer
- 202: second layer
- 210: first container
- 220: second container
- 230: duct
- 231: cover-type duct seal
- 232: sealing strip
- 235: additional seal at the duct
- 240: perforation
- 260: rim
- 310: accessory
- 400: tire

## Claims

1. Container system (200) for particles of a tire balancing material (100) comprising a first container (210) for holding the particles of the tire balancing material (100),
**characterized in that**
the container system (200) comprises a second container (220) for holding at least one accessory (310),
the second container is connected to the first container (210) and a perforation (240) is provided between the first container (210) and the second container (220),
the first container has a duct (230) for releasing the particles of the tire balancing material (100), whereby the duct (230) is oriented towards the second container (210) and is sealed by the second container and by a duct seal (231, 235), and
the container system is made of paper or a combination of paper and plastics or of composite material comprising plastics and paper.

2. Container system (200) according to claim 1,
**characterized in that**
the duct (230) may be opened by removing or tearing off the second container (220) from the first container (210).

3. Container system (200) according to any one of the previous claims,
**characterized in that**
the at least one accessory (310) is a tire valve core or a valve cap.

4. Method for applying particles of a tire balancing material (100) into a tire comprising the steps of:
- providing a container system (200) comprising a first container (210) with a duct (230) holding the particles of the tire balancing material (100), a duct seal (231,235) and a second container (220) sealing the duct holding at least one accessory (310), and a perforation (240) between the containers (210, 220),
- removing the second container (220) from the first container (210) along the perforation (240) and thereby opening the duct including opening the duct seal (231, 235) from the second container when necessary and
- placing the first container (210) in a tire.

5. Method according to claim 4,
**characterized in that**
the container system (200) is a container system according to any one of claims 1 to 3.

6. Method according to claim 4 or 5, including the further step of removing the content from the second container (220) and applying it to the tire.

7. Method according to claim 6, wherein the content is at least a tire valve core or a valve cap.

## Patentansprüche

1. Behältersystem (200) für Partikel eines Reifenauswuchtmaterials (100), umfassend einen ersten Behälter (210) zur Aufnahme der Partikel des Reifenauswuchtmaterials (100),
**dadurch gekennzeichnet, dass**
das Behältersystem (200) einen zweiten Behälter (220) zur Aufnahme mindestens eines Zubehörteils (310) umfasst,
der zweite Behälter mit dem ersten Behälter (210) verbunden ist und eine Perforation (240) zwischen dem ersten Behälter (210) und dem zweiten Behälter (220) vorgesehen ist,
der erste Behälter einen Kanal (230) zum Freigeben der Partikel des Reifenauswuchtmaterials (100) hat, wobei der Kanal (230) in Richtung des zweiten Behälters ausgerichtet ist (210) und durch den zweiten Behälter und durch eine Kanalabdichtung (231, 235) abgedichtet ist, und
das Behältersystem aus Papier oder aus einer Kombination von Papier und Plastik oder aus einem Kompositmaterial umfassend Papier und Plastik gemacht ist.

2. Behältersystem (200) nach Anspruch 1,
**dadurch gekennzeichnet, dass**
der Kanal (230) durch Entfernen oder Abreißen des zweiten Behälters (220) von dem ersten Behälter (210) geöffnet werden kann.

3. Behältersystem (200) nach einem der vorhergehenden Ansprüche, **dadurch gekennzeichnet, dass**
das mindestens eine Zubehörteil (310) ein Reifenventilkern oder eine Ventilkappe ist.

4. Verfahren zum Anbringen von Partikeln eines Reifenauswuchtmaterials (100) in einen Reifen, umfassend die folgenden Schritte:
- Bereitstellen eines Behältersystems (200), umfassend einen ersten Behälter (210) mit einem Kanal (230) zur Aufnahme der Partikel des Reifenauswuchtmaterials (100), eine Kanalabdichtung (231, 235) und einen zumindest ein Zubehörteil (310) aufnehmenden zweiten Behälter (220), welche den Kanal abdichten, und eine Perforation (240) zwischen den Behältern (210, 220)
- Entfernen des zweiten Behälters (220) von dem ersten Behälter (210) entlang der Perforation (240) und dadurch Öffnen des Kanals einschließlich Öffnen der Kanalabdichtung (231, 235) von dem zweiten Behälter wenn nötig, und
- Platzieren des ersten Behälters (210) in einem Reifen.

5. Verfahren nach Anspruch 4,
**dadurch gekennzeichnet, dass**
das Behältersystem (200) ein Behältersystem nach einem der Ansprüche 1 bis 3 ist.

6. Verfahren nach Anspruch 4 oder 5, umfassend den weiteren Schritt des Entfernens des Inhalts aus dem zweiten Behälter (220) und Anbringen des Inhalts an den Reifen.

7. Verfahren nach Anspruch 6, wobei der Inhalt zumindest ein Reifenventilkern oder eine Ventilkappe ist.

## Revendications

1. Un système de conteneur (200) pour des particules d'un matériau d'équilibrage de pneu (100) comprenant un premier conteneur (210) pour retenir les particules du matériau d'équilibrage de pneu (100),
**caractérisé en ce que**
le système de conteneur (200) comprend un deuxième conteneur (220) pour retenir au moins un accessoire (310),
le deuxième conteneur est connecté au premier conteneur (210) et une perforation (240) est fournie entre le premier conteneur (210) et le deuxième conteneur (220),
le premier conteneur possède une conduite (230) pour libérer les particules du matériau d'équilibrage de pneu (100), où la conduite (230) est orientée vers le deuxième conteneur (210) et est scellée par le deuxième conteneur et par un joint de conduite (231, 235), et
le système de conteneur est fait en papier ou une combinaison de papier et de plastique ou de matériau composite comprenant du plastique et du papier.

2. Un système de conteneur (200) selon la revendication 1,
**caractérisé en ce que**
la conduite (230) peut être ouverte en enlevant ou en déchirant le deuxième conteneur (220) à partir du premier conteneur (210).

3. Un système de conteneur (200) selon l'une des revendications précédentes, **caractérisé en ce que**
au moins un accessoire (310) est un noyau de vanne de pneu ou un bouchon de vanne.

4. Une méthode pour appliquer des particules d'un matériau d'équilibrage de pneu (100) dans un pneu comprenant les étapes de:
- l'apport d'un système de conteneur (200) comprenant un premier conteneur (210) avec une conduite (230) retenant les particules du matériau d'équilibrage de pneu (100), un joint de conduite (231, 235) et un deuxième conteneur (220) scellant la conduite retenant au moins un accessoire (310), et une perforation (240) entre les conteneurs (210, 220),
- le retrait du deuxième (220) à partir du premier conteneur (210) le long de la perforation (240) et ouvrant par conséquent la conduite incluant l'ouverture du joint de conduite (231, 235) à partir du deuxième conteneur si nécessaire et
- le placement du premier conteneur (210) dans un pneu.

5. Une méthode selon la revendication 4,
**caractérisée en ce que**
le système de conteneur (200) est un système de conteneur selon l'une des revendications 1 à 3.

6. Une méthode selon la revendication 4 ou 5, incluant l'autre étape de retrait du contenu du deuxième conteneur (220) et d'application de celui-ci sur le pneu.

7. Une méthode selon la revendication 6, où le contenu est au moins un noyau de vanne de pneu ou un bouchon de vanne.
